# EUROPEAN PATENT APPLICATION

(11) **EP 2 533 573 A1**
(43) Date of publication of application: **12.12.2012**
(21) Application number: 11168896.6
(22) Date of filing: 07.06.2011
(51) Int. Cl.: H04W 48/02, H04W 36/38

(54) **Method and system for network-centric control of network connectivity for mobile terminals in IEEE 802.11 based networks**

(71) Applicant: Deutsche Telekom AG, 53113 Bonn (DE)
(72) Inventor: Bayer, Nico, Dr., 61231 Bad- Nauheim (DE); Roos, Andreas, 64354 Reinheim (DE); Sivchenko, Dmitry, Dr., 64285 Darmstadt (DE)
(74) Representative: 2K Patentanwälte Blasberg Kewitz & Reichel

(57) **Abstract**

Method for for network-controlling connections of IEEE 802.11 based terminals to desired IEEE 802.11 Access Points (AP) without need for any additional software/hardware required on terminals whereby APs are connected via a network to a control plane, which is able to configure the APs based on policy data, comprising the steps:
- Analysing the policy data by the decision unit to decide if a terminal has to change the current AP;
- if the terminal has to change the current AP, defining a subset of APs for which a connection is prohibited and/or defining a subset of APs for which a connection is allowed;
- configuring defined subsets of APs by the control unit via the network;
- sending to the terminal from the current AP a Disassociation Request if handover decision is taken for this terminal by the decision unit;
- rejecting Association Request from the terminal by the APs for which a connection is prohibited, and accepting an Association Request of the terminal by the APs for which a connection is allowed.

## Description

### Field of the Invention

The invention discloses a method and system for controlling connections of IEEE 802.11 based terminals to desired IEEE 802.11 Access Points (APs). The APs are connected via a network to a control plane, which controls the APs. The control plane consists of policy data unit, decision unit and control unit.

### Background of Invention

Since the deployment of IEEE 802.11b [1] standards based wireless local area networks (WLANs) users changed their behaviour to get Internet access. Before the rapid growth of WLANs user were connected to the Internet by means of cable connections. Nowadays many users are connected to the Internet via WLANs. Due to further improvements of the basic IEEE 802.11b standard (e.g. IEEE 802.11g and IEEE 802.11n) the performance in IEEE 802.11 based access networks have been enhanced significantly. Moreover, nearly every mobile device, such as Laptop, tablet PC or smart phone is equipped with an IEEE 802.11 based wireless interface. This increases the attractiveness and demand to consume application and network services on mobile devices, even when users are on the move. However, the limited range of WLAN access points (APs) may lead to frequent handovers in the case the user is mobile. In the current version of the IEEE 802.11 standard the mobile device itself controls to which AP to connect and when to perform a handover.

With regard to additional network features, such as load balancing or energy-saving this is not sufficient and it is necessary for the network operator to control to which AP a mobile node is or will be connected.

### Background of the invention

Network based, or, initiated, handover mechanisms for the control of user connectivity to WLAN are important for network operators to perform network management and extended access control that can be exploited for enhanced network efficiency and economy. There are several mechanisms available for this purpose, e.g. Access Network Discovery and Selection Function (ANDSF) [3] defined by the 3rd Generation Partnership Project (3GPP) and 802.21 Media Independent Handover (MIH) framework [2] defined by the Institute of Electrical and Electronic Engineers (IEEE). One of the main aims of these frameworks is to support network-controlled handovers for user terminals. ANDSF supports user equipment (UE) in the mobile and wireless network discovery/selection process and provides policy based network access for UEs. IEEE 802.21 enables handover support and interoperability between heterogeneous access networks with the focus on handover initiation and handover preparation.

The main problem for successful deployment of mentioned frameworks in existing WLANs is that these standards require additional software and functionalities on client side. There is, however, a huge number of devices already deployed and used today which mostly support the basic IEEE 802.11 access standard only. This means, in general there is no demand for users to buy new hardware equipment. The deployment of additional protocol stacks in software is complicated or even in hardware it is not possible on these devices. Furthermore, the roll out of the above mechanisms, such as ANDSF and IEEE 802.21 in new hardware will take some more time. Moreover, a successful roll out leading to a wide deployment of the handover supporting mechanisms cannot be guaranteed.

In this invention a new method and system is proposed to control connectivity of IEEE 802.11 devices to the network that does not require any changes on the terminal side. Network based handover management can then be enabled for the huge number of legacy IEEE 802.11 terminals to provide benefits regarding network management issues, such as load balancing or energy efficiency.

### Summary of Invention

In IEEE 802.11 standard every client has to finish successfully the association procedure by exchanging Association Request / Association Reply messages between the client and the Access Point (AP). The client may stay connected to the AP as long as it is included in the association table of the AP. Typically, a client is deleted from association table of an AP after reception of a Disassociation Request message from the client or after a timeout, e.g. in case the client is inactive for a specific period of time. IEEE 802.11 also defines a possibility to send Disassociation Request messages by an AP to an associated client in order to inform it about deletion from association list of the AP. The established WLAN link between the client and AP is then released.

The invention comprises a method for controlling connections of IEEE 802.11 based terminals to desired (network operator/owner selected) IEEE 802.11 based Access Points. The APs are connected via a network to a control plane, which is able to configure the APs based on policy data. The policy data defines the conditions under which a handover of the terminal to another APs has to be performed. The policy data can take into account internal conditions of the APs and terminals (e.g. channel capabilities, available bandwidth or signal strength) or external conditions of the network (e.g. operator/owner related aspects regarding network access connectivity, traffic management or energy management). Moreover, policy data include the load of the network or the AP. For example, if the network connection from WLAN AP to the backbone/aggregation network is highly loaded, for example when data rate exceeds a predetermined threshold, a change of the terminal attachment can be necessary in order to reduce network load based on load balancing among available APs. Another aspect can be the quality of the wireless access link between AP and UE. The terminal might face a lot of packet loss due to collisions and/or a bad link quality (e.g. because of interference or the distance between the terminal and the AP). Furthermore, the power consumption of the AP can be reduced by aggregating the terminals at a fewer number of APs and turning off unused APs.

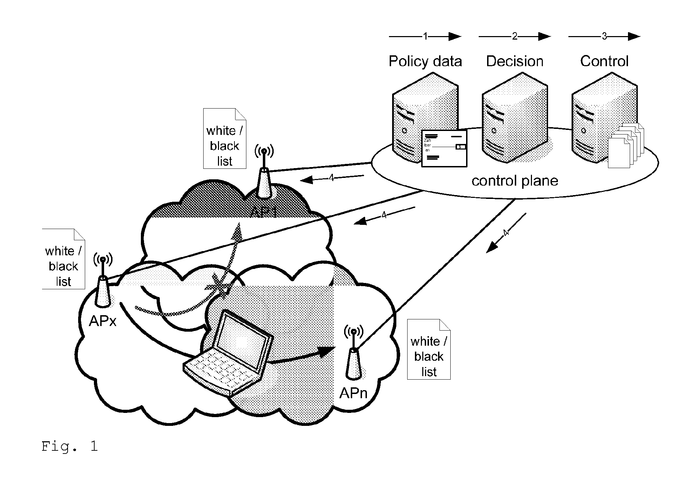

The attachment of the terminals is controlled by using Black-lists and Whitelists. An example is shown in Fig 1. Based on the example policies mentioned above the terminal might have to change the current AP (APx). A subset of APs (AP1) is defined by the control plane (in the decision unit) for which a connection from specific terminals is prohibited (Blacklist) and a subset of APs (APn) is defined for which a connection from specific terminals is only allowed (Whitelist). In a preferred embodiment the lists contain MAC addresses of IEEE 802.11 access interfaces of terminals.

The defined Black- and Whitelists are enforced on APs by the control unit. The current AP sends a Disassociation Request to the terminal if its MAC address if it is listed on the Blacklist. If the terminal tries to connect/reconnect to the same AP or to another AP where the MAC address of terminal is also in the Blacklist, rejecting Association Reply messages are sent by the APs (AP1) for which a connection is prohibited, and a successful Association Reply is sent to the terminal by the APs (APn) if a connection is allowed.

The communication between the control unit and the APs can be done by standard approaches. The decision unit implemented within the control plane triggers the control unit also implemented in the control plane which then configures AP/-s by using any available network mechanisms, for example telnet or SNMP. The exchange of data is bidirectional. The APs inform the control unit about the connected terminals as well as the network and load conditions of the WLAN. Also information about the terminal in reach can be exchanged.

Another part of the invention is a system for controlling connections of IEEE 802.11 based terminals. The system comprises a set of WLAN Access Points (AP1, APx, APn) to which the terminal is connected, and which are controllable via a network by means of the control plane. The control plane consists of one or several server systems, such as policy data unit, decision unit and control unit, which is/are able to configure the APs based on policy data. The policy data are stored in a database or a file (for example in XML format) within the policy data unit. The decision unit comprises a processor and programs which allow analysing of the policy data to decide if a terminal has to change the current AP (APx). If the terminal has to change the current AP (APx) a subset of APs (AP1) for which a connection is prohibited and a subset of APs (APn) for which a connection is allowed has to be defined previously. Over a network interface the defined subsets from the control unit are sent to the APs. The AP and its processing unit (processor) sends over its air interface to the terminal a Disassociation Request to disconnect the terminal from the current AP.

The processing unit and the air interface of the AP are also used for sending rejecting Association Replies of the terminal by the APs (AP1) for which a connection is prohibited, and accepting an Association Request (sending successful Association Reply) of the terminal by the APs (APn) for which a connection is allowed.

The principle of the proposed mechanism is to synchronise a set of WLAN APs forming an extended WLAN access network in order to accept association of certain client/-s only to selected AP/-s. This can be implemented by rejection of Association Request messages for new associations and by generating Disassociation Request messages to clients for existing associations. When getting an Association Response with a rejection for association, the client will try to connect to other AP/-s with the same WLAN name (so called ESSID) available in the surrounding. The client will try to connect to the same AP once again or to connect to another AP (depending on the implementation on the terminal side) also in the case a Disassociation Request is received from its current serving AP. In this way the network can indirectly control the client to connect to a desired AP selected either uniquely or on a group basis.

To implement the proposed mechanism in IEEE 802.11 based network two additional functionalities should be introduced in the network as shown in Fig. 1.

The Decision Unit takes decisions which AP/-s should not be used by particular clients. Furthermore, the decision unit may decide which AP/-s should or must be used by specific clients. Either black or white lists can be used for clients to connect to AP/-s. The Control Unit is the central entity that performs reconfigurations on affected AP/-s. These reconfigurations are performed to disconnect associated clients and/or reject connection requests from blocked clients trying to establish new connections as decided by the decision unit.

Decision unit can reuse any available information or policies for the decision that is out of scope of this patent application. The decisions are performed for clients which are identified by MAC addresses of IEEE 802.11 network interfaces used for the access. The decision unit triggers the control unit that configures AP/-s by using any available mechanisms, e.g. using telnet, SNMP or other methods which are out of scope of this patent application. The interface between decision and control unit can be implemented in various ways; both units can be implemented either on the same or on different entities in the network.

The reuse of the IEEE 802.11 defined association procedure triggered by the control unit is as follows.
● By default Association Requests are accepted on AP/-s from any MAC address
● If AP receives the Request from control unit to reject a client having the MAC address *MACaddr***:**
   o If the client with MAC address *MACaddr* is connected to the AP, the AP sends Disassociation Request to *MACaddr* disturbing the existing association
   o The *MACaddr* is added to the black list, such that any further Association Request messages from terminal with *MACaddr* are rejected by the AP
   o In case the Request message demands to block any MAC address, Disassociation Requests are sent to all connected clients and no Association Request will be accepted if no further information is available
● For specific APs instead of using a black list, a white list could be used. A white list by default blocks new associations as long as the MAC address of the client is not listed. If AP receives the Request from control unit to accept a specific MAC address *MACaddr,* it will add it to the white list. Association Requests from *MACaddr* contained in the white list are always accepted. White lists are useful in the case any clients must be rejected on an AP excepting those, explicitly informed by the control unit to the AP. For instance, this feature can be used for premium users.

This invention presents a new method and system to control the connectivity of mobile terminals to the distributed network infrastructure based on IEEE 802.11. This method exploits association/disassociation processes defined by the IEEE 802.11 standard in [1]. No extensions of the software or hardware are required on the terminal side. The identification of clients is based on MAC addresses of their IEEE 802.11 interfaces.

### Brief Description of Drawings

Fig. 1 discloses a wireless IEEE 802.11 network with multiple APs, a mobile terminal and a control plane. The control plane consists of policy data unit, decision unit and control unit. The control plane is used to control network initiated terminal connectivity to the different APs of the WLAN. The handover process is initiated by the decision unit investigating the policy data. The provided triggers and information from the decision unit is used by the control unit to perform handover initiation by means of the APS.

### Detailed Description of Preferred Embodiments

N mobile customers are connected to a WLAN HotSpot comprising
X WLAN APs. The HotSpot observes the status of the network, e.g. traffic processed by every AP or energy consumption. Based on these observations a decision unit may decide to transfer specific clients from one AP to another. Additional functions for taking decisions for connectivity of terminals to AP/-s and for controlling and configuring of AP/-s in the network to execute control over terminal connectivity to the network are introduced into the network whereby they can be implemented either on different network entities or be collocated on the same hardware. A use case for such a decision could be that the observer has found that one AP is overloaded and that transferring clients to other APs will improve the overall network performance. Another use case could be that the decision unit aims to save energy by connecting all clients to a small number of APs in order to be able to switch off unused APs.

In order to perform the client transfer, the decision unit triggers the control unit to disconnect client with MAC address *MACaddr* from the APx it is currently connected to. Due to this, the client will connect to any other AP available. This triggering message might be sent from decision unit to the control unit using an XML message. To do this, the control unit sends a request to the APx with a request to disconnect MAC and to put this *MACaddr* into the black list. This request might also be sent using an XML message or using e.g. a SOAP based communication. To disconnect a client with a specific *MACaddr,* APx generates a Disassociation Request as defined in the IEEE 802.11 standard and sends it to the client with this specific *MACaddr*. Moreover, APx puts *MACaddr* into its black list so that terminal with *MACaddr* cannot connect to APx after disassociation again. In this way the client having *MACaddr* will connect to any other AP available in its surrounding environment. Alternatively to the decision to hand over the client to any other available AP, a policy can be used in the network to connect the overloading client with *MACaddr* to a specific AP, e.g. APn. When this decision is taken, the decision unit triggers the control unit for the enforcement. The control unit then sends a request to APx to disconnect *MACaddr* and to decline its further association requests. Moreover, a request to all other surrounding APs excepting APn is sent to put *MACaddr* onto their black lists to prevent client association with this specific *MACaddr.* Then all APs excepting APn will put *MACaddr* onto their black lists. APx additionally sends a Disassociation Request to *MACaddr* to disconnect the client from the network. The client will then drop the existing connection to APx and try to connect to another available AP. Since only APn will accept Association Request messages from *MACaddr,* the client will connect to APn. Further similar scenarios are possible using the proposed mechanism and system, e.g. to use specific APs only for certain clients, e.g. for VIP clients. White lists then are used for these APs.

Fig 1 shows an example with several APs (APx, AP1, APn) being controlled by white/black lists and a terminal which is not allowed to connect to the access point AP1 but has to move from APx to APn. The control plane comprises three servers, such as policy data unit, decision unit and control unit, being responsible for the storing of policy data (1), for the making of a decision (2) based on the policy data and/or other network related information, and third server is responsible for a control unit (3) which controls (4) the APs by sending the white/black lists or parts of them.

References:
[1] IEEE Std 802.11^{TM}-1999 - Information technology- Telecommunications and information exchange between systems- Local and metropolitan area networks- Specific requirements- Part 11: Wireless LAN Medium Access Control (MAC) and Physical Layer (PHY) Specifications.
[2] IEEE, "IEEE Standard for Local and Metropolitan Area Networks Part 21: Media Independent Handover," IEEE Standard 802.21.2008, December 2009.
[3] 3GPP, "Access to the 3GPP Evolved Packet Core (EPC) via non-3GPP access networks; Stage 3" ETSI TS 124 302 V9.4.0, December 2010.

## Claims

1. Method for network-controlling connections of IEEE 802.11 based terminals to desired IEEE 802.11 Access Points (AP) without need for any additional software/hardware required on terminals whereby APs are connected via a network to a control plane, which is able to configure the APs based on policy data, comprising the steps:
- Analysing the policy data by the decision unit to decide if a terminal has to change the current AP;
- if the terminal has to change the current AP, defining a subset of APs for which a connection is prohibited and/or defining a subset of APs for which a connection is allowed;
- configuring defined subsets of APs by the control unit via the network;
- sending to the terminal from the current AP a Disassociation Request if handover decision is taken for this terminal by the decision unit;
- rejecting Association Request from the terminal by the APs for which a connection is prohibited, and accepting an Association Request of the terminal by the APs for which a connection is allowed.

2. The method according to claim 1, wherein terminal is identified by MAC address of its network interface card supporting IEEE 802.11.

3. The method according to claims 1 or 2, whereby on APs in defined subsets either black lists are configured to reject Association Request messages from specific terminals to AP/-s or white lists are configured to accept Association Request messages only from specific terminals.

4. The method according to one or more of the claims 1 to 3, whereby the analysis of the policy data comprises one or more of the following:
- load of the network or AP; quality of the connections between AP and terminal; power consumption of the AP; distance of the AP to the terminal; traffic situation on access link and/or in backbone/aggregation network considering operator/owner guidelines.

5. The method according to one or more of the claims 1 to 4, wherein the control plane implements a Decision Unit triggering a Control Unit that configures AP/-s by using any available network mechanisms, for example telnet or SNMP.

6. System for controlling connections of IEEE 802.11 based terminals comprising:
- a set of IEEE 802.11 Access Points (AP) to which the terminal is connected, and which are controllable via a network by means of;
- a control plane, to which the APs are connected via a network, and which is able to configure the APs based on policy data, comprising means which allow analysing of the policy data by a decision unit to decide if a terminal has to change the current AP; and
if the terminal has to change the current AP, means for defining a subset of APs for which a connection is prohibited and/or defining a subset of APs for which a connection is allowed;
means for configuring the defined subsets of APs by the control unit over the network;
means in the AP for sending to the terminal from the current AP a Disassociation Request if handover decision is taken for this terminal by the decision unit;
means in the AP for sending rejecting Association Request from the terminal by the APs for which a connection is prohibited, and accepting an Association Request of the terminal by the APs for which a connection is allowed..

7. The system according to claim 6, wherein the subsets are defined by MAC address of the network interface card supporting IEEE 802.11.

8. The system according to claims 6 or 7, whereby on APs in defined subsets either black lists are configured to reject Association Request messages from specific terminals to AP/-s or white lists are configured to accept Association Request messages only from specific terminals.

9. The system according to one or more of the claims 6 to 8, whereby the analysis of the policy data comprises one or more of the following means:
means to determine the load of the network or AP; means to determine the quality of the connections between AP and
terminal; means to determine the power consumption of the AP; means to determine the distance of the AP to the terminal; ; traffic situation on access link and/or in backbone/aggregation network considering operator/owner guidelines.

10. The system according to one or more of the claims 6 to 9, wherein in the control plane a Decision Unit triggers a Control Unit that configures APs by using any available network mechanisms, for example telnet or SNMP.
